# DEMANDE DE BREVET EUROPEEN

(11) **EP 3 979 064 A1**
(43) Date de publication de la demande: **06.04.2022**
(21) Numéro de dépôt: 20306148.6
(22) Date de dépôt: 02.10.2020
(51) Int. Cl.: G06F 3/06

(54) **DISPOSITIF POUR L'ACCES A DISTANCE A DES DONNEES STOCKEES SUR UN DISPOSITIF DE STOCKAGE DE DONNEES DU DISPOSITIF, SYSTEME ET PROCEDE ASSOCIES**

(71) Demandeur: Bull SAS, 78340 Les Clayes-sous-Bois (FR)
(72) Inventeur: ZENG EYINDANGA, Landry Stéphane, 38100 Grenoble (FR); MUBAMU MOMBO, Dany Jonas, 78340 Les Clayes Sous Bois (FR)
(74) Mandataire: Cabinet Camus Lebkiri

(57) **Abrégé**

Un aspect de l'invention concerne un dispositif (10) pour l'accès à distance à des données, comportant :
- un dispositif de stockage de données (13) sur lequel sont stockées les données ;
- un premier processeur (12) configuré pour gérer le fonctionnement du dispositif (10) ;
- un bouton marche/arrêt (11) configuré pour allumer et éteindre ledit dispositif (10) ;
- un premier module de connexion (16) configuré pour établir une connexion sans fil ;
- un moyen d'affichage (18) ;
le dispositif (10) comportant :
- un deuxième processeur (14) indépendant du premier processeur (12), configuré pour accéder aux données du dispositif de stockage de données (13) ;
- un organe de commande (15) configuré pour allumer et éteindre ledit deuxième processeur (14).

## Description

### DOMAINE TECHNIQUE DE L'INVENTION

Le domaine technique de l'invention est celui de l'accès à des données stockées sur un dispositif de stockage, et plus particulièrement celui de l'accès à distance à des données stockées sur un dispositif de stockage.

La présente invention concerne un dispositif pour l'accès à des données stockées sur un dispositif de stockage et plus particulièrement un dispositif pour l'accès à distance à des données stockées sur un dispositif de stockage du dispositif. La présente invention concerne également un système comportant le dispositif et un équipement utilisateur, un procédé mis en œuvre par le dispositif et un procédé mis en œuvre par l'équipement utilisateur permettant l'accès à distance aux données du dispositif de stockage.

### ARRIERE-PLAN TECHNOLOGIQUE DE L'INVENTION

Lors d'une itinérance, par exemple dans les transports en commun, un utilisateur peut ne pas pouvoir sortir son ordinateur pour accéder à des données stockées sur l'ordinateur pour différentes raisons, comme l'encombrement, la sécurité, la confidentialité des données ou le besoin d'être mobile à tout instant.

Pour accéder à des données sans avoir à utiliser son ordinateur, une solution connue est de stocker des données en ligne, par exemple dans le nuage (« cloud » selon la terminologie anglaise), et d'y accéder via un équipement moins encombrant, comme un smartphone, à l'aide d'une connexion internet. Cependant, cette solution est peu sécurisée, car elle requiert une mise en ligne des données, et l'utilisateur peut ne pas disposer à tout moment d'une connexion internet pendant son voyage.

Pour remédier aux inconvénients de la solution précédente, il est connu d'enregistrer les données sur un dispositif de stockage mobile comme une clé USB, ou un disque dur externe, mais dans ce cas, l'utilisation d'un ordinateur s'avère nécessaire.

Ainsi, il existe un besoin pour un utilisateur, d'accéder à des données stockées sur un dispositif de stockage de son ordinateur, de manière sécurisée et en préservant la confidentialité des données.

### RESUME DE L'INVENTION

L'invention offre une solution aux problèmes évoqués précédemment, en permettant à l'utilisateur d'accéder à des données stockées sur un dispositif de stockage d'ordinateur sans exposer les données à la vue de tiers.

Un premier aspect de l'invention concerne un dispositif pour l'accès à distance à des données comportant :
- un dispositif de stockage de données sur lequel sont stockées les données ;
- un premier processeur configuré pour gérer le fonctionnement du dispositif ;
- un bouton marche/arrêt configuré pour allumer et éteindre ledit dispositif ;
- un premier module de connexion configuré pour établir une connexion sans fil;
- un moyen d'affichage ;
le dispositif comportant :
- un deuxième processeur indépendant du premier processeur, configuré pour accéder aux données du dispositif de stockage de données ;
- un organe de commande configuré pour allumer et éteindre ledit deuxième processeur.

Grâce à l'invention, l'allumage du deuxième processeur est indépendant de l'allumage du dispositif. Ainsi, le deuxième processeur peut être allumé alors que le dispositif est éteint. Une fois une connexion sans fil établie avec un autre équipement via le premier module de connexion, le deuxième processeur peut donner accès aux données stockées sur le dispositif de stockage de données à l'autre équipement sans qu'il y ait besoin d'allumer le dispositif, ce qui permet de ne pas exposer les données à la vue de tiers via le moyen d'affichage du dispositif.

Outre les caractéristiques qui viennent d'être évoquées dans le paragraphe précédent, le dispositif selon le premier aspect de l'invention peut présenter une ou plusieurs caractéristiques complémentaires parmi les suivantes, considérées individuellement ou selon toutes les combinaisons techniquement possibles.

Selon une variante de réalisation, le dispositif comporte un indicateur visuel ou sonore configuré pour indiquer si le deuxième processeur est allumé ou éteint.

Cette variante permet à l'utilisateur d'avoir une indication sur l'état de fonctionnement du deuxième processeur.

Selon une variante de réalisation, le dispositif comporte au moins une alimentation électrique configurée pour alimenter le premier processeur et/ou le deuxième processeur.

L'existence d'une seule alimentation électrique pour le dispositif permet de s'affranchir d'une alimentation électrique pour le deuxième processeur réduisant l'encombrement.

L'existence d'une première alimentation électrique alimentant le dispositif indépendamment d'une deuxième alimentation électrique alimentant le deuxième processeur permet de pouvoir accéder à distance aux données du dispositif de stockage de données même si la première alimentation électrique est défaillante. Il est alors possible d'extraire à distance les données pour les stocker sur un autre équipement, par exemple le temps de changer la première alimentation électrique défectueuse.

Selon une variante de réalisation, le dispositif de stockage de données est un disque dur.

Un deuxième aspect de l'invention concerne un système comportant :
- un dispositif selon le premier aspect de l'invention ;
- au moins un équipement utilisateur comportant un deuxième module de connexion configuré pour établir une connexion sans fil avec le dispositif via le premier module de connexion ;
- une première application installée sur ledit dispositif, configurée pour échanger des données avec l'équipement utilisateur via la connexion sans fil;
- une deuxième application installée sur l'équipement utilisateur, configurée pour échanger des données avec le dispositif via la connexion sans fil et pour accéder à distance aux données stockées sur le dispositif de stockage de données dudit dispositif via la connexion sans fil.

L'utilisateur peut ainsi accéder aux données stockées sur le dispositif de stockage de données du dispositif sur un équipement utilisateur via la connexion sans fil établie entre le premier module de connexion et le deuxième module de connexion. Le deuxième processeur peut communiquer les données du dispositif de stockage de données à l'équipement utilisateur sans avoir à utiliser le reste du dispositif. L'utilisateur pourra ainsi utiliser un équipement utilisateur plus adapté au contexte dans lequel il se trouve, par exemple un contexte d'itinérance, permettant de consulter ou gérer des données de manière confidentielle via la deuxième application.

Selon une variante de réalisation, la première application est configurée pour limiter l'accès à distance aux données stockées sur le dispositif de stockage de données à un groupe d'équipements utilisateurs, chaque équipement utilisateur du groupe d'équipements utilisateurs étant associé à au moins une information d'authentification.

L'accès à distance aux données du dispositif de stockage de données est sécurisé. En effet, la première application permet de limiter le nombre d'équipements utilisateurs et de choisir quels équipements utilisateurs peuvent avoir accès aux données, en conditionnant l'accès aux données à la fourniture d'une information d'authentification valide.

Selon une variante de réalisation, la connexion sans fil entre le premier module de connexion et le deuxième module de connexion est une connexion courte portée.

Cette variante permet à l'utilisateur d'avoir une connexion plus sécurisée puisque les tentatives de connexion au dispositif ne pourront être réalisées que dans un périmètre réduit autour du dispositif. Par exemple, les équipements utilisateurs devront se connecter au dispositif dans une distance comprise entre 0 et 10 mètres. La connexion est par exemple une connexion Bluetooth ou une connexion Wi-Fi.

Un troisième aspect de l'invention concerne un procédé mis en œuvre par le dispositif selon le premier aspect de l'invention, compris dans le système selon le deuxième aspect de l'invention, pour l'accès à distance aux données stockées sur le dispositif de stockage de données comportant :
- une étape d'allumage du deuxième processeur via l'organe de commande ;
- une étape d'établissement d'une connexion sans fil avec l'équipement utilisateur via le premier module de connexion ;
- une étape d'envoi par la première application à l'équipement utilisateur, d'une demande d'authentification via la connexion sans fil ;
- une étape de réception par la première application, d'une réponse à la demande d'authentification comportant au moins une information d'authentification, via la connexion sans fil ;
- si l'équipement utilisateur est compris dans le groupe d'équipements utilisateurs et l'information d'authentification reçue est identique à l'information d'authentification associée à l'équipement utilisateur dans le groupe d'équipements utilisateurs, une étape d'envoi par la première application, d'une autorisation d'accès aux données stockées sur le dispositif de stockage de données à l'équipement utilisateur via la connexion sans fil.

Selon une variante de réalisation, le procédé comporte une étape de rupture de la connexion sans fil avec l'équipement utilisateur après un temps d'inactivité préalablement défini via la première application

Cette variante, permet d'éviter qu'un utilisateur non autorisé accède aux données du dispositif de stockage de données après avoir dérobé un équipement utilisateur ayant accès à distance aux données du dispositif de stockage de données.

Selon une variante de réalisation, le procédé comporte une étape préalable de configuration comportant :
- une sous-étape d'allumage du dispositif via le bouton marche/arrêt ;
- une sous-étape d'allumage du deuxième processeur via l'organe de commande ;
- une sous-étape de création via la première application du groupe d'équipements utilisateurs comprenant au moins un équipement utilisateur auquel est associé au moins une information d'authentification.

Un quatrième aspect de l'invention concerne un procédé mis en œuvre par l'équipement utilisateur dans le système pour l'accès à distance aux données stockées sur le dispositif de stockage de données, comportant :
- une étape d'établissement d'une connexion sans fil avec le dispositif via le deuxième module de connexion ;
- une étape de réception par la deuxième application, d'une demande d'authentification du dispositif via la connexion sans fil ;
- une étape d'envoi par la deuxième application au dispositif, d'une réponse à la demande d'authentification comportant au moins une information d'authentification, via la connexion sans fil ;
- si l'équipement utilisateur est compris dans le groupe d'équipements utilisateurs et si l'information d'authentification envoyée est identique à l'information d'authentification associée à l'équipement utilisateur dans le groupe d'équipements utilisateurs, une étape de réception par la deuxième application, d'une autorisation d'accès aux données stockées sur le dispositif de stockage de données du dispositif via la connexion sans fil.

Selon une variante de réalisation, l'étape de réception par la deuxième application d'autorisation d'accès aux données comporte une sous-étape de transfert et/ou de lecture et/ou de suppression et/ou de modification des données.

Un cinquième aspect de l'invention concerne un produit-programme d'ordinateur comprenant des instructions qui, quand le programme est exécuté sur un ordinateur, conduisent celui-ci à mettre en œuvre les étapes du procédé mis en œuvre par le dispositif selon le troisième aspect de l'invention.

Un sixième aspect de l'invention concerne un produit-programme d'ordinateur comprenant des instructions qui, quand le programme est exécuté sur un ordinateur, conduisent celui-ci à mettre en œuvre les étapes du procédé mis en œuvre par l'équipement utilisateur selon le quatrième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système selon l'invention comportant le dispositif selon l'invention et un équipement utilisateur.
- La figure 2 est un schéma synoptique illustrant les principales étapes d'un procédé selon l'invention mis en œuvre par le dispositif selon l'invention.
- La figure 3 est un schéma synoptique illustrant les principales étapes d'un procédé selon l'invention mis en œuvre par l'équipement utilisateur du système selon l'invention.
- La figure 4 est un schéma synoptique illustrant les sous-étapes d'une étape de configuration du procédé selon l'invention mis en œuvre par le dispositif selon l'invention.

### DESCRIPTION DETAILLEE

Sauf précision contraire, un même élément apparaissant sur des figures différentes présente une référence unique.

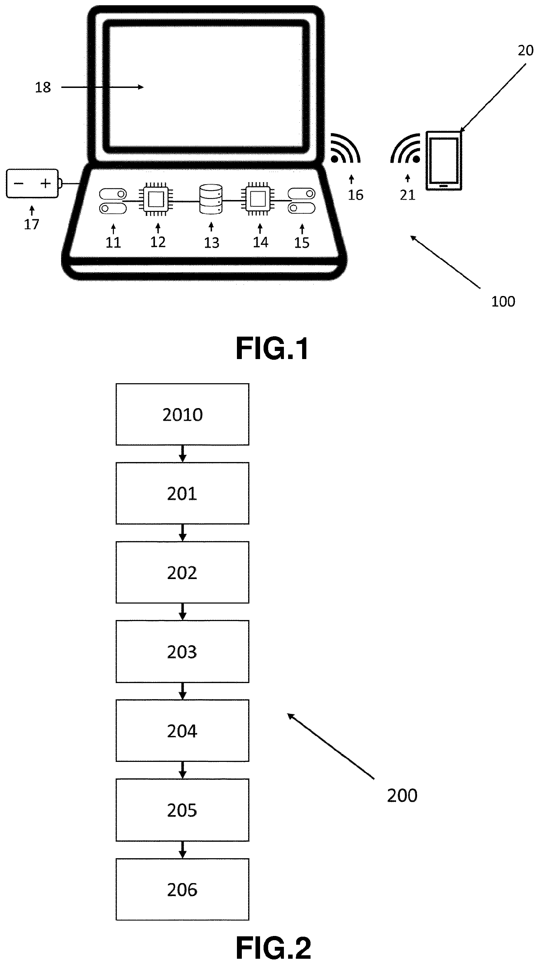

[Fig. 1] La figure 1 montre une représentation schématique d'un système 100 selon l'invention.

Le système 100 comporte :
- un dispositif 10 ;
- un équipement utilisateur 20.

Le système 100 permet l'accès à distance à des données stockées dans le dispositif 10, et plus particulièrement l'accès à distance de l'équipement utilisateur 20 aux données stockées dans le dispositif 10.

Par accès à distance, on entend la possibilité de relier des appareils de communication qui sont éloignés l'un de l'autre.

Le dispositif 10 comporte :
- au moins un dispositif de stockage de données 13, ici un disque dur 13 ;
- au moins un premier processeur 12 ;
- un bouton marche/arrêt 11 ;
- au moins un deuxième processeur 14 ;
- un organe de commande 15 ;
- un premier module de connexion 16 ;
- au moins une alimentation électrique 17 ;
- un moyen d'affichage 18, ici un écran 18.

Le dispositif 10 comporte un boîtier, le boîtier enveloppant le dispositif 10.

Le moyen d'affichage 18 peut également être un projecteur.

Le dispositif 10 comporte un système d'exploitation.

Le dispositif 10 comporte également au moins une mémoire vive, c'est-à-dire une mémoire volatile.

Le premier processeur 12 est connecté au disque dur 13, au bouton marche/arrêt 11 et à l'alimentation électrique 17 de manière physique, par exemple à l'aide de fils ou câbles électriques. Le premier processeur 12 peut également être connecté au premier module de connexion 16. Le premier processeur 12 a accès à la mémoire vive.

Le deuxième processeur 14 est connecté au disque dur 13, à l'organe de commande 15, à l'alimentation électrique 17 et au premier module de connexion 16 de manière physique, par exemple à l'aide de fils ou câbles électriques. Le deuxième processeur 14 a accès à la mémoire vive.

De manière générale, tous les composants du dispositif 10 sont connectés à l'alimentation électrique 17 de manière physique, par exemple à l'aide de fils ou câbles électriques.

Le dispositif 10 est un objet qui peut comporter un disque dur 13 et un processeur, par exemple un ordinateur, portable ou non, ou un objet connecté.

Le disque dur 13 stocke des données numériques, par exemple des fichiers textes, des images, ou des fichiers sons. Le dispositif 10 peut comporter plusieurs disques durs 13. Le disque dur 13 peut avoir une capacité de stockage comprise entre 0 et 1000 téraoctets, de préférence entre 0.1 et 10 téraoctets. Le disque dur 13 est non volatile, c'est-à-dire que le disque dur 13 conserve les données qu'il stocke en l'absence d'alimentation électrique 17.

Le bouton marche/arrêt 11 permet d'allumer et d'éteindre le dispositif 10, en activant, respectivement désactivant l'alimentation électrique 17. Une fois le dispositif 10 allumé, au moins le premier processeur 12, le disque dur 13 et la mémoire vive sont mis sous tension via l'alimentation électrique 17.

Le bouton marche/arrêt 11 est par exemple un bouton poussoir.

Le premier processeur 12 gère le fonctionnement du dispositif 10 et en particulier son système d'exploitation. Dès que le dispositif 10 est allumé via le bouton marche/arrêt 11, le premier processeur 12 lance le chargement en mémoire vive du système d'exploitation. Le système d'exploitation réalise notamment la gestion du système de fichiers, la gestion des entrées sorties, et la gestion de l'affichage graphique. L'utilisateur a donc accès aux données stockées sur le disque dur 13 via le système d'exploitation ainsi chargé.

Le premier processeur 12 est par exemple un microprocesseur.

L'organe de commande 15 permet d'allumer et d'éteindre le deuxième processeur 14. Ainsi, même si le dispositif 10 est éteint, l'organe de commande 15 permet d'allumer le deuxième processeur 14 en activant l'alimentation électrique 17 du dispositif 10 sans allumer le dispositif 10 et le premier processeur 12. Une fois le deuxième processeur 14 allumé, au moins le premier module de connexion 16, le disque dur 13 et la mémoire vive sont mis sous tension via l'alimentation électrique 17. Une fois allumé, le deuxième processeur 14 lance le chargement en mémoire vive du système d'exploitation. Comme le dispositif 10 est éteint, l'utilisateur n'a pas accès aux données stockées sur le disque dur 13 via le système d'exploitation ainsi chargé.

Le deuxième processeur 14 est par exemple un microprocesseur.

L'organe de commande 15 est par exemple un bouton poussoir, une télécommande ou encore un autre équipement permettant d'allumer le deuxième processeur 14 à distance. L'allumage/extinction à distance du deuxième processeur 14 par l'organe de commande 15 peut s'effectuer par exemple via une connexion infrarouge, par ondes radio ou par ultrasons.

Dans une première variante de l'invention, le dispositif 10 possède une alimentation électrique 17 permettant d'alimenter le dispositif 10 et donc le premier processeur 12, et le deuxième processeur 14.

Dans une variante de l'invention, le dispositif 10 possède deux alimentations électriques 17 permettant d'alimenter respectivement le dispositif 10 et donc le premier processeur 12, et le deuxième processeur 14. L'alimentation électrique 17 peut par exemple provenir d'une batterie ou d'un réseau électrique.

Le premier module de connexion 16 permet d'établir une connexion sans fil avec au moins un autre équipement, par exemple l'équipement utilisateur 20. La gestion de la connexion sans fil est réalisée par le système d'exploitation.

Le premier module de connexion 16 peut être interne au boîtier du dispositif 10 ou externe au boîtier du dispositif 10. Dans ce dernier cas, le premier module de connexion 16 peut être relié au dispositif 10 par exemple via un connecteur USB (pour « Universal Serial Bus »).

Le deuxième processeur 14 permet donc à un équipement par exemple l'équipement utilisateur 20 d'accéder à distance aux données du dispositif 10 via la connexion sans fil établie via le premier module de connexion 16 sans que le premier processeur 12 et le dispositif 10 ne soient allumés. Ainsi, l'équipement utilisateur 20 peut accéder aux données du disque dur 13 sans utiliser le dispositif 10.

Le dispositif 10 peut comporter un indicateur visuel ou sonore, permettant de savoir si le deuxième processeur 14 est allumé ou éteint, par exemple un témoin lumineux, un écran ou un signal sonore.

L'équipement utilisateur 20 est un équipement pouvant établir une connexion sans fil, par exemple un smartphone, une tablette, ou une montre connectée, de préférence adapté à une utilisation en itinérance.

L'équipement utilisateur 20 comporte un deuxième module de connexion 21 permettant d'établir une connexion sans fil avec le dispositif 10 via le premier module de connexion 16, c'est-à-dire que le premier module de connexion 16 et le deuxième module de connexion 21 permettent d'établir un même type de connexion, par exemple une connexion Bluetooth ou Wi-Fi. Par connexion sans fil, on entend que la connexion ne nécessite pas d'équipement physique, comme un câble, pour être établie.

L'arrêt du dispositif 10 n'entraîne pas la rupture de la connexion entre le premier module de connexion 16 et le deuxième module de connexion 21. La connexion est maintenue tant que le deuxième processeur 14 est allumé.

Lors de l'établissement d'une connexion sans fil entre deux éléments, chaque élément échange son identité avec l'autre élément. L'identité d'un élément est par exemple son adresse IP. Ainsi, quand la connexion sans fil est établie entre le dispositif 10 et l'équipement utilisateur 20, le dispositif 10 connaît l'identité de l'équipement utilisateur 20 et l'équipement utilisateur 20 connaît l'identité du dispositif 10.

La connexion sans fil entre le premier module de connexion 16 et le deuxième module de connexion 21 est par exemple une connexion courte portée, par exemple une connexion Bluetooth. On entend par connexion courte portée, une connexion établie entre deux éléments séparés d'une distance de connexion comprise entre 0 et 100 mètres, de préférence comprise entre 0 et 5 mètres.

Une fois que le deuxième processeur 14 est allumé, la connexion sans fil avec l'équipement utilisateur 20 est immédiatement établie, c'est-à-dire qu'aucune étape préalable d'activation de la connexion entre le dispositif 10 et l'équipement utilisateur 20 est nécessaire avant l'établissement de la connexion.

Une première application peut par exemple être installée sur le dispositif 10 via le système d'exploitation du dispositif 10.

La première application a accès aux données du disque dur 13 du dispositif 10.

La première application permet de limiter le nombre d'équipements utilisateurs 20 pouvant accéder à distance aux données du disque dur 13 en définissant un groupe d'équipements utilisateurs 20. A chaque équipement utilisateur 20 du groupe d'équipements utilisateurs 20 est associé au moins une information d'authentification. L'information d'authentification est par exemple un mot de passe, une empreinte biométrique, une identité faciale ou un code.

La première application peut permettre de restreindre l'accès aux données du disque dur 13 de manière personnalisée pour chaque équipement utilisateur 20 du groupe d'équipements utilisateurs 20.

La première application peut permettre de choisir le nombre maximum d'équipements utilisateurs 20 dans le groupe d'équipements utilisateurs 20.

La première application permet de visualiser ou supprimer les équipements utilisateurs 20 du groupe d'équipements utilisateurs 20.

La première application peut permettre de visualiser l'arborescence des données du disque dur 13, c'est-à-dire l'organisation des données permettant de consulter et de manipuler les données de manière plus efficace. Cette fonction s'appuie sur les fonctions de l'explorateur de fichiers du système d'exploitation du dispositif 10, c'est-à-dire l'outil permettant de naviguer dans les données du disque dur 13. Cette fonction est disponible si le dispositif 10 est allumé.

La première application peut permettre de définir un temps d'inactivité permettant de rompre la connexion sans fil entre l'équipement utilisateur 20 et le dispositif 10, sans éteindre le deuxième processeur 14.

Le temps d'inactivité correspond par exemple au temps pendant lequel aucune manipulation n'est faite via une deuxième application ou par exemple au temps pendant lequel aucune manipulation n'est faite sur l'équipement utilisateur 20.

La deuxième application est installée sur l'équipement utilisateur 20.

La deuxième application permet à l'équipement utilisateur 20 d'accéder via la connexion sans fil aux données du disque dur 13 si l'équipement utilisateur 20 appartient au groupe d'équipements utilisateurs 20 défini via la première application.

La deuxième application permet à l'équipement utilisateur 20 ayant reçu du dispositif 10 une autorisation d'accès à distance aux données du disque dur 13, de naviguer dans les données du disque dur 13 et/ou de transférer les données depuis le disque dur 13 du dispositif 10 jusqu'à l'équipement utilisateur 20 et/ou de transférer des données depuis l'équipement utilisateur 20 jusqu'au disque dur 13 du dispositif 10.

La deuxième application peut présenter une vue d'interface permettant à l'équipement utilisateur 20 qui a reçu une autorisation d'accès aux données de visualiser l'arborescence des données accessibles.

Si l'alimentation électrique 17 est une batterie, la deuxième application peut permettre de connaître et visualiser le niveau de charge de la batterie.

Une fois la connexion sans fil établie entre le dispositif 10 et l'équipement utilisateur 20, la première application et la deuxième application peuvent échanger des données, par exemple des messages.

[Fig. 2] La figure 2 est un schéma synoptique illustrant les étapes d'un procédé 200 mis en œuvre par le dispositif 10 pour l'accès à distance aux données stockées sur le disque dur 13.

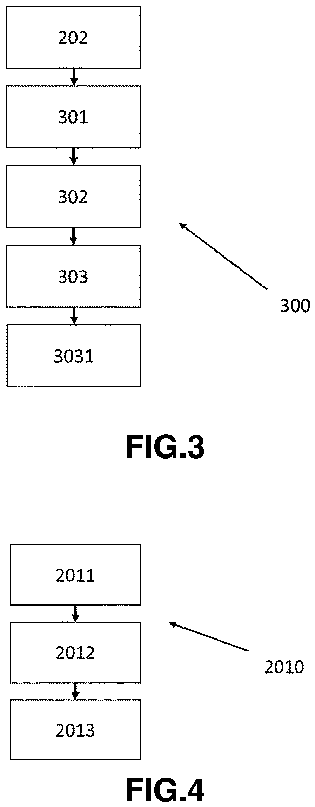

[Fig.4] La figure 4 est un schéma synoptique illustrant une étape 2010 préalable de configuration du procédé 200 mis en œuvre par le dispositif 10.

Dans une première sous-étape 2011 de l'étape 2010 de configuration, le dispositif 10 est allumé par l'intermédiaire du bouton marche/arrêt 11.

Dans une deuxième sous-étape 2012 de l'étape 2010 de configuration, le deuxième processeur 14 est allumé par l'intermédiaire de l'organe de commande 15.

Dans une troisième sous-étape 2013 de l'étape 2010 de configuration, le groupe d'équipements utilisateurs 20 comprenant au moins un équipement utilisateur 20 auquel est associé au moins une information d'authentification est créé.

Dans une autre étape optionnelle du procédé 200 mis en œuvre par le dispositif 10, au moins un équipement utilisateur 20 du groupe d'équipements utilisateurs 20 préalablement créé est supprimé via la première application.

Dans une première étape 201 du procédé 200 mis en œuvre par le dispositif 10, le deuxième processeur 14 est allumé par l'intermédiaire de l'organe de commande 15.

Dans une deuxième étape 202 du procédé 200, une connexion sans fil est établie avec l'équipement utilisateur 20 via le premier module 16 de connexion.

Dans une troisième étape 203 du procédé 200, une demande d'authentification est envoyée par la première application à l'équipement utilisateur 20 via la connexion sans fil établie.

La demande d'authentification est par exemple un message requérant au moins une information d'authentification.

Dans une quatrième étape 204 du procédé 200, une réponse à la demande d'authentification comportant au moins une information d'authentification est reçue par la première application via la connexion sans fil.

Si l'équipement utilisateur 20 fait partie du groupe d'équipements utilisateur 20 et si l'information d'authentification reçue est identique à l'information d'authentification associée à l'équipement utilisateur 20 dans le groupe d'équipements utilisateurs 20, dans une cinquième étape 205 du procédé 200, une autorisation d'accès à distance aux données est envoyée à l'équipement utilisateur 20 par la première application via la connexion sans fil.

L'autorisation d'accès à distance envoyée à l'équipement utilisateur 20 est par exemple un message qui comprend des informations permettant l'accès à distance aux données du disque dur 13.

Dans une sixième étape optionnelle 206 du procédé 200, la connexion sans fil avec l'équipement utilisateur 20 est rompue après que le temps d'inactivité défini préalablement via la première application s'est écoulé.

[Fig.3] La figure 3 est un schéma synoptique illustrant les étapes du procédé 300 mis en œuvre par l'équipement utilisateur 20 pour l'accès à distance aux données stockées sur le disque dur 13.

Dans une première étape 202 du procédé 300, une connexion sans fil est établie avec le dispositif 10 via le deuxième module 21 de connexion.

Dans une deuxième étape 301 du procédé 300, une demande d'authentification du dispositif 10 est reçue par la deuxième application via la connexion sans fil établie.

La demande d'authentification est envoyée par la première application du dispositif 10 lors de la troisième étape 203 d'envoi de la demande d'authentification du procédé 200.

Dans une troisième étape 302 du procédé 300, une réponse à la demande d'authentification est envoyée au dispositif 10 comportant au moins une information d'authentification, par la deuxième application via la connexion sans fil.

La réponse à la demande d'authentification est reçue par le dispositif 10 lors de la quatrième étape 204 de réception du procédé 200.

Si l'information d'authentification envoyée est identique à l'information d'authentification associée à l'équipement utilisateur 20, dans une quatrième étape 303 du procédé 300, une autorisation d'accès à distance aux données stockées sur le disque dur 13 du dispositif 10 est reçue par la deuxième application via la connexion sans fil établie.

L'autorisation d'accès à distance aux données est envoyée par la première application du dispositif 10 lors de la cinquième étape 205 d'envoi du procédé 200.

Dans une sous-étape 3031, l'équipement utilisateur 20 peut transférer et/ou lire et/ou supprimer et/ou modifier des données stockées sur le disque dur 13 du dispositif 10. Les modifications faites par l'équipement utilisateur 20 des données se répercutent sur le disque dur 13 du dispositif 10.

Par exemple, l'équipement utilisateur 20 peut renommer les données du disque dur 13 du dispositif 10 ou créer de nouvelles données puis les transférer sur le disque dur 13 du dispositif 10.

Le dispositif de stockage de données 13 a été décrit dans le cas d'un disque dur mais il peut s'agir de tout type de dispositif de stockage de données 13 tel qu'une carte mémoire amovible.

## Revendications

1. Dispositif (10) pour l'accès à distance à des données, comportant :
- un dispositif de stockage de données (13) sur lequel sont stockées les données ;
- un premier processeur (12) configuré pour gérer le fonctionnement du dispositif (10) ;
- un bouton marche/arrêt (11) configuré pour allumer et éteindre ledit dispositif (10) ;
- un premier module de connexion (16) configuré pour établir une connexion sans fil ;
- un moyen d'affichage (18) ;
le dispositif (10) étant **caractérisé en ce qu'**il comporte :
- un deuxième processeur (14) indépendant du premier processeur (12), configuré pour accéder aux données du dispositif de stockage de données (13) ;
- un organe de commande (15) configuré pour allumer et éteindre ledit deuxième processeur (14).

2. Dispositif (10) selon la revendication 1, **caractérisé en ce qu'**il comporte un indicateur visuel ou sonore configuré pour indiquer si le deuxième processeur (14) est allumé ou éteint.

3. Dispositif (10) selon l'une quelconque des revendications 1 ou 2, **caractérisé en ce qu'**il comporte au moins une alimentation électrique (17) configurée pour alimenter le premier processeur (12) et/ou le deuxième processeur (14).

4. Dispositif (10) selon l'une quelconque des revendications 1 à 3, **caractérisé en ce que** le dispositif de stockage de données (13) est un disque dur.

5. Système (100), **caractérisé en ce qu'**il comporte :
- un dispositif (10) selon l'une quelconque des revendications 1 à 4 ;
- au moins un équipement utilisateur (20) comportant un deuxième module de connexion (21) configuré pour établir une connexion sans fil avec le dispositif (10) via le premier module (16) de connexion ;
- une première application installée sur ledit dispositif (10), configurée pour échanger des données avec l'équipement utilisateur (20) via la connexion sans fil;
- une deuxième application installée sur l'équipement utilisateur (20), configurée pour échanger des données avec le dispositif (10) via la connexion sans fil et pour accéder à distance aux données stockées sur le dispositif de stockage de données (13) dudit dispositif (10) via la connexion sans fil.

6. Système (100) selon la revendication 5, **caractérisé en ce que** la première application est configurée pour limiter l'accès à distance aux données stockées sur le dispositif de stockage de données (13) à un groupe d'équipements utilisateurs (20), chaque équipement utilisateur (20) du groupe d'équipements utilisateurs (20) étant associé à au moins une information d'authentification.

7. Système (100) selon l'une quelconque des revendications 5 ou 6, **caractérisé en ce que** la connexion sans fil entre le premier module de connexion (16) et le deuxième module de connexion (21) est une connexion courte portée.

8. Procédé mis en œuvre par le dispositif (10) selon l'une quelconque des revendications 1 à 4, compris dans le système (100) selon l'une quelconque des revendications 5 à 7, pour l'accès à distance aux données stockées sur le dispositif de stockage de données (13), **caractérisé en ce qu'**il comporte :
- une étape d'allumage (201) du deuxième processeur (14) via l'organe de commande (15) ;
- une étape d'établissement d'une connexion sans fil (202) avec l'équipement utilisateur (20) via le premier module de connexion (16) ;
- une étape d'envoi (203) par la première application à l'équipement utilisateur (20), d'une demande d'authentification via la connexion sans fil;
- une étape de réception (204) par la première application, d'une réponse à la demande d'authentification comportant au moins une information d'authentification, via la connexion sans fil ;
- si l'équipement utilisateur (20) est compris dans le groupe d'équipements utilisateurs (20) et l'information d'authentification reçue est identique à l'information d'authentification associée à l'équipement utilisateur (20) dans le groupe d'équipements utilisateurs (20), une étape d'envoi par la première application, d'une autorisation d'accès (205) aux données stockées sur le dispositif de stockage de données (13) à l'équipement utilisateur (20) via la connexion sans fil.

9. Procédé selon la revendication 8, **caractérisé en ce qu'**il comporte une étape (206) de rupture de la connexion sans fil avec l'équipement utilisateur (20) après un temps d'inactivité préalablement défini via la première application.

10. Procédé selon l'une quelconque des revendications 8 ou 9, **caractérisé en ce qu'**il comporte une étape (2010) préalable de configuration comportant :
- une sous-étape (2011) d'allumage du dispositif (10) via le bouton marche/arrêt (11).
- une sous-étape (2012) d'allumage du deuxième processeur (14) via l'organe de commande (15) ;
- une sous-étape (2013) de création via la première application, du groupe d'équipements utilisateurs (20) comprenant au moins un équipement utilisateur (20) auquel est associé au moins une information d'authentification.

11. Procédé mis en œuvre par l'équipement utilisateur (20) compris dans le système (100) selon l'une des revendications 5 à 7, pour l'accès à distance aux données stockées sur le dispositif de stockage de données (13), **caractérisé en ce qu'**il comporte :
- une étape d'établissement d'une connexion sans fil (202) avec le dispositif (10) via le deuxième module de connexion (21) ;
- une étape de réception (301) par la deuxième application, d'une demande d'authentification du dispositif (10) via la connexion sans fil ;
- une étape d'envoi (302) par la deuxième application au dispositif (10), d'une réponse à la demande d'authentification comportant au moins une information d'authentification, via la connexion sans fil ;
- si l'équipement utilisateur (20) est compris dans le groupe d'équipements utilisateurs (20) et si l'information d'authentification envoyée est identique à l'information d'authentification associée à l'équipement utilisateur (20) dans le groupe d'équipements utilisateurs (20), une étape de réception par la deuxième application, d'une autorisation d'accès aux données (303) stockées sur le dispositif de stockage de données (13) du dispositif (10) via la connexion sans fil.

12. Procédé selon la revendication 11, **caractérisé en ce que** l'étape de réception par la deuxième application d'autorisation d'accès aux données (303) comporte une sous-étape (3031) de transfert et/ou de lecture et/ou de suppression et/ou de modification des données.

13. Produit-programme d'ordinateur comprenant des instructions qui, quand le programme est exécuté sur un ordinateur, conduisent celui-ci à mettre en œuvre les étapes du procédé mis en œuvre par le dispositif (10) selon l'une quelconque des revendications 8 à 10.

14. Produit-programme d'ordinateur comprenant des instructions qui, quand le programme est exécuté sur un ordinateur, conduisent celui-ci à mettre en œuvre les étapes du procédé mis en œuvre par l'équipement utilisateur (20) selon l'une quelconque des revendications 11 ou 12.
